# EUROPÄISCHE PATENTSCHRIFT

(11) **EP 2 026 241 B1**
(45) Veröffentlichungstag und Bekanntmachung des Hinweises auf die Patenterteilung: **30.11.2011**
(21) Anmeldenummer: 08013593.2
(22) Anmeldetag: 29.07.2008
(51) Int. Cl.: G06K 7/00

(54) **Modulare SIM-Kartenlesevorrichtung mit federbelasteter Schublade**
Modular SIM-card reader device with spring-loaded drawer
Dispositif de lecture de carte SIM modulaire doté d'un tiroir à ressort

(30) Priorität: 01.08.2007 DE 102007036120
(43) Veröffentlichungstag der Anmeldung: 18.02.2009
(73) Patentinhaber: Amphenol-Tuchel Electronics GmbH, 74080 Heilbronn (DE)
(72) Erfinder: Schnell, Thomas, 74078 Heilbronn (DE); Dörr, Martin, 74211 Leingarten (DE)

(56) Entgegenhaltungen:
- DE-A1- 10 021 396
- DE-A1- 10 339 281
- US-A- 5 402 095
- US-B1- 6 261 113

## Beschreibung

Die Erfindung betrifft eine SIM-Kartenlesevorrichtung gemäß Anspruch 1.

Die Erfindung bezieht sich daher auf eine modulare SIM-Kartenlesevorrichtung, insbesondere einen SIM-Kartenleser mit einer Schublade.

Im Stand der Technik sind unterschiedlichste SIM-Kartenlesevorrichtungen bekannt. Allgemein als SIM-Karta bezeichnet im Bezug auf SIM-Kartenleser gemäß der vorliegenden Erfindung sind kleine SIM-Karten gemeint, die üblicherweise in Mobilfunktelefonen oder Handys verwendet werden.

Im Stand der Technik sind beispielsweise IM-Kartenleser mit schwenkbarem Deckel zur Kartenaufnahme bekannt. Solche Kartenleser bestehen aus einem Kartenkontaktträger und einem zu diesem Kartenkontaktträger schwenkbar und verschiebbar angeordneten Deckel, an dem eine SIM-Karte aufnehmbar angeordnet ist. Der Deckel kann nach dem Einsetzten der SIM-Karte von einer Offnungsstellung in eine Schlleßstellung geschwenkt werden und dann mittels verschieben in dieser Schließstellung arretiert werden. Dadurch erhält die Karte mit ihrer Kontaktseite Kontakt mit den Lesekontakten der SIM- Kartenkontaktiervorrichtung. Eine alternative Ausführungsform von SIM-Kartenlesem ist ein SIM-Kartenleser der anstelle eines schwenkbar angelenkten Deckels über eine Schublade verfügt, in welche die SIM-Karte einlegbar ist und welche von einer Einschubsposition in eine Leseposition bewegt werden kann.

Bei SIM-Karteniesem, die eine in einem Gehäuse hin und her bewegbar gelagerte Schublade, die zur Aufnahme einer SIM-Karte geeignet ist, verwenden, ist es unter anderem gewünscht, einen Mechanismus zur Verriegelung vorzusehen, welcher die Schublade von einer Einschubposition/Öffnungsposition bis zu einer Leseposition fixiert und führt.

Als Leseposition wird die Position verstanden, In welcher die Schublade sich in einer solchen Position gegenüber dem Gehäuse und den Kartenkontakten befindet, dass die Leszone der SIM-Karte über den Kontakten des SIM-Kartenlesers zu Liegen kommt und diese kontaktiert. Bei Verwendung eines solchen Kartenlesers Insbesondere eines SIM-Kartenlesers für kleine SIM-Karte in einem Handy oder in einem entsprechenden Gehäuse ist es erwünscht, dass die Schublade in der Leseposition, also In der eingeschobenen Position nicht aus dem Gehäuse insbesondere aus dem Handygehäuse hervorsteht,

Weiterhin ist bei einem solchen SIM-Kartenleser gewünscht, dass die Schublade in der Einschubposition, also in der geöffneten Stellung nicht aus dem Gehäuse oder aus der Schubladenführung herausrutscht und verloren geht. Zusätzlich sollte in der Leseposition ein Verriegelungsmechanlsmus die Schublade so arretieren, dass sich damit die In ihrer Schublade befindliche SiM-Karte sicher in der Leseposition befindet und nicht aus dieser unbeabsichtigt löst.

Als Stand der Technik kann die noch nicht veröffentlichte deutsche Patentanmeldung Nr. 10 2007 018 789.2 gesehen werden. Die dort gezeigte SIM-Kartenlesevorrlchtung umfasst ein Gehäuse, einen Kontaktträger welcher mit dem Gehäuse verbunden ist, einen im Gehäuse separat angebrachter Verriegelungsmechanismus, sowle eine Schublade, die zwischen dem Gehäuse und dem Kontaktträger bewegbar zwischen einer Öffnungs- und Lesestellung angeordnet ist.

DE 10 339 281 offenbart die Merkmale des Oberbegriffes von Anspruch 1.

Nachteilig bei diesen SIM-Karteniesern ist einerseits der benötigte Bauraum und andererseits die vorgegebenen festen Dimensionen die den Einbau nur in Mobiltelefone oder in Applikationen ermöglichen, die exakt diesen Raum entsprechend der vorhandenen Außengeometrle des Lesers erlauben. Insbesondere Ist entlang der Längsseitenkanten des SIM-Kartenlesers jeweils auf der rechten und linken Seite ein Verriegelungsmechanismus vorgesehen, welcher den Kartenleser insgesamt verbreitert.

Zusätzlicher Nachteil ist die aufwendige Konstruktion der vielen Bauteilen, die von ihren Toleranzlagen aufelnander abgestimmt werden müssen. Auch die diffizile Montage der kleinen Bauteilen in Bezug auf ihre sichere Funktion erfordert einen erheblichen Aufwand.

Ein weiterer Nachteil besteht darin, dass bei ausgezogener Schublade die Schublade nicht mehr von dem Verriegelungsmechanismus gehalten wird und verloren gehen kann.

Die Erfindung hat sich daher die Aufgabe gestellt, einen SIM-Kartenlaser mit Schublade derart bereit zu stellen, dass einerseits eine flexible Verwendung in verschiedenen Applikationen des SIM-Kartenlesers gewährleistet ist, welcher gleichzeitig klein baut in Breite und Länge und eine sichere Verriegelung der Schublade gewährleistet,

Weitere Aufgabe der Erfindung ist, die federbelastete Führung der Schublade von der Öffnungs- und Elnschubsposition bis hin zur Leseposition, so dass ein Festhalten der Schublade in der Schubladenhalterung gewährleistet Ist.

Weitere Aufgabe der Erfindung besteht darin, neben der prinzipiellen Miniaturislerung, einen Kartenleser derart zu verkleinern, dass er eine minimale Breite In Bezug auf die Außenabmeseungen einer SIM-Karte annimmt und in einer Vielzahl von Applikationen und unterschiedlichen Mobiltelefonen Anwendung finden kann, somit durch seine Bauweise flexibel einsetzbar ist. Ferner soll ein SIM-Kartenleser als modularer SIM-Kartenleser so bereitgestellt werden, dass die Anzahle der Bauteile reduziert wird, bei gleichzeltig kostengünstigerer Montage und Fertigung.

Die Erfindung ist gegenstand des Anspruchs 1.

Zur Lösung dieser Aufgabe sieht die Erfindung bei einem SIM-Kartenleser, Insbesondere bei einem modularen SIM-Kartenleser, mit einer in einem Gehäuse des SIM-Kartenlesers hin und her bewegbaren Schublade zur Aufnahme der SIM-Karte vor, dass die Schubladenführung einerseits als Gehäuse ausgebildet ist und andererseits gleichzeitig Führungs- und Verriegelungselemente bereitstellt, und zwar in der Form, dass der modulare SIM-Kartenleser aus einer kontakttragenden Kontakteinrichtung, einem Gehäuse und einer Schublade besteht, die durch Gehäuseelemente und Verrlegelungselemente von ihrer Öffnungsstellung in Ihre Schließstellung sicher am Gehäuse geführt wird und positlonierbar ist. Es sei bemerkt, dass die Erfindung auch allgemein auf kleine Karten, Insbesondere kleine Chipkarten angewendet werden kann, insbesondere auch bei einem Leser, der anstelle einer Schublade andere Karteneinführungsmittel verwendet. Vorzugsweise ist das Gehäuse aus Metall ausgebildet.

Der erfindungsgemäße SIM-Kartenleser weist, wie bereits zuvor erläutert, vorzugsweise eine Schublade auf, die zum einen eine Translationsbewegung in Einschubrichtung bis zur Leseposition der SIM-Karte vorsieht und zum anderen einen Translationsbewegung In Auszugsrichtung, also In entgegengesetzter Richtung, um die SIM-Karte aus der Lesestellung und damit aus dem SIM-Kartenleser heraus zu transportieren, In eine Öffnungsstellung.

Erfindungsgemäß ist ein metallisches, das Schubladensystem tragendes Gehäuse, mit einem einstückig ausgebildeten Verriegelungs- und Führungshebel vorgesehen. Erfindungsgemäß umfasst der Verriegelungshebel ein Halteelement, welches gleichzeitig auch Führungselement für die Schublade bildet. Somit hat das Halteelement einerseits die Funktion die Schublade unverlierbar zu machen, gleichzeitig aber auch die Aufgabe, die Schublade In Ihrer Position sicher zu führen. Somit Ist erfindungsgemäß ein Gehäuse vorgesehen, was vorzugsweise als "selbsttragendes Schubladenführungselement und Verriegelungselemenf ausgebildet ist.

Bei der hier vorliegenden Erfindung wird daher ein separates Gehäuse zur Anbringung von einem Deckel und von Führungselementen nicht benötigt. Insofern ist auch gewährleistet, dass der Kontaktträger von dem Deckel- und Führungsteil losgelöst angeordnet werden kann und nicht mit diesem einstückig verbindbar angeordnet sein muse, wie dies im Stand der Technik der Fall Ist, wo der Kontaktträger mit einem Rahmen verbunden Ist und dieser Führungsmittel und Verriegelungsmittel bereitstellt. Vorzugsweise ist der Deckel so ausgeformt, dass er gleichzeitig erste Führungselemente für die Schublade bildet, die in Halteelementen für den gesamten Kartenleser enden und so ausgebildet sind, dass diese beispielsweise auf eine Leiterplatte oder auf ein Gehäuse montierbar und mit diesem verbindbar sind, Erfindungsgemäß sind weiterhin an den Seiten des Deckels jeweils rechts und links entlang der Längsseitenkanten federnde Verriegelungsarme mit integriertem Halteelement so angeordnet, dass diese einerseits die Schublade fest in einer Leseposition halten können und andererseits entlang einer Gleitebene der Schublade ausreichend Halt für die Schublade bilden.

Dadurch, dass das Halteelement an dem federnden Verriegelungshebel angeordnet ist und zwar an dessen federseitigem Ende, erzielt der Verriegelungshebel einerseits eine Federwirkung mit seinem Verriegeiungsefement orthogonal zur Einschubrichtung, nämlich in der Richtung der Kartenebene hin zur Mitte der Karte beziehungsweise des Kartenlesers und andererseits mit seinem Haltelement in einer dazu orthogonalen Richtung senkrecht zur Kartenebene der Führungsebene der Schublade. Insofern wirkt der Verriegelungs- und Führungshebel In zwei zueinander orthogonalen Richtungen, einerseits zum Verriegeln der Schublade In einer Leseposition und andererseits zur federbelasteten Führung der Schublade während Ihrer Translationsbewegung von der Öffnungsstellung in die Lesestellung.

Weitere Vorteile, Ziele und Einzelheiten der Erfindung ergeben sich aus den Ansprüche sowie aus der Beschreibung eines Ausführungsbeispiels anhand der Zeichnungen. In der Zeichnung zeigt:
Fig. 1 eine perspektivische Draufsicht auf einen erfindungsgemäßen SIM-Kartenleser und zwar mit eingesetzter Schublade;
Fig. 2 eine perspektivische Draufsicht auf einen SIM-Kartenleser wobei hier die Schublade sich außerhalb des Deckels befindet, in einer nicht eingeschobenen Position;
Fig. 3 eine Einzelheit des SIM-Kartenlesers aus der Fig. 1 und 2, wobei sich die Schublade hier in eingeschobener und verriegelter Position befindet;
Fig. 4 eine Draufsicht auf den erfindungsgemäßen Kartenleser, gemäß Fig. 3.

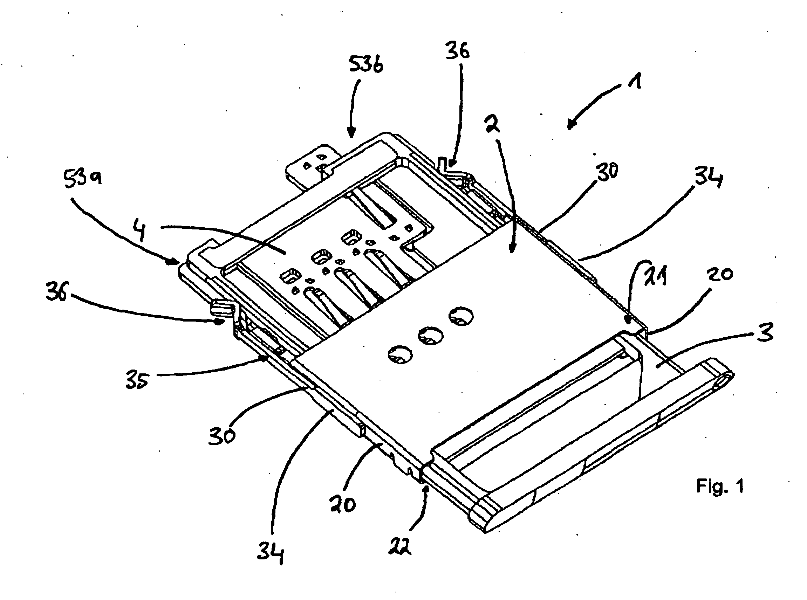

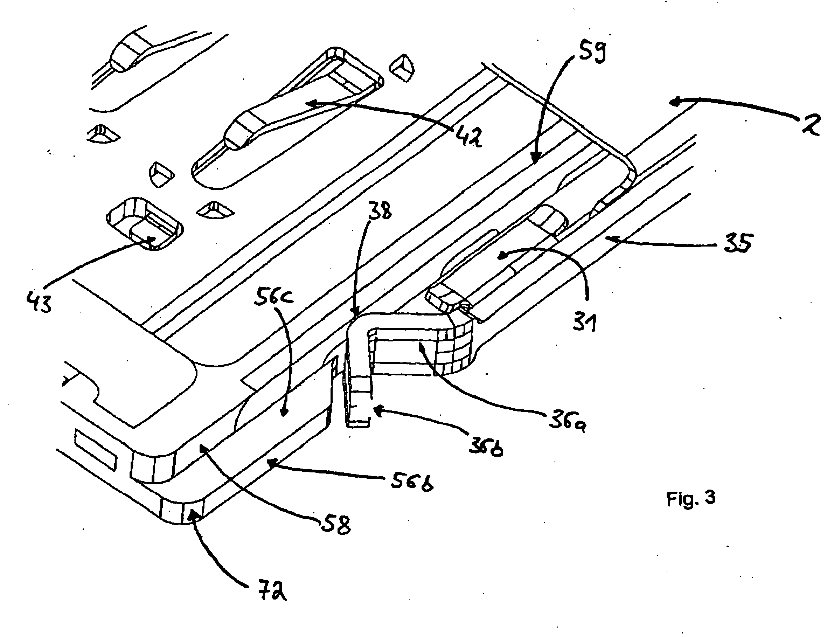

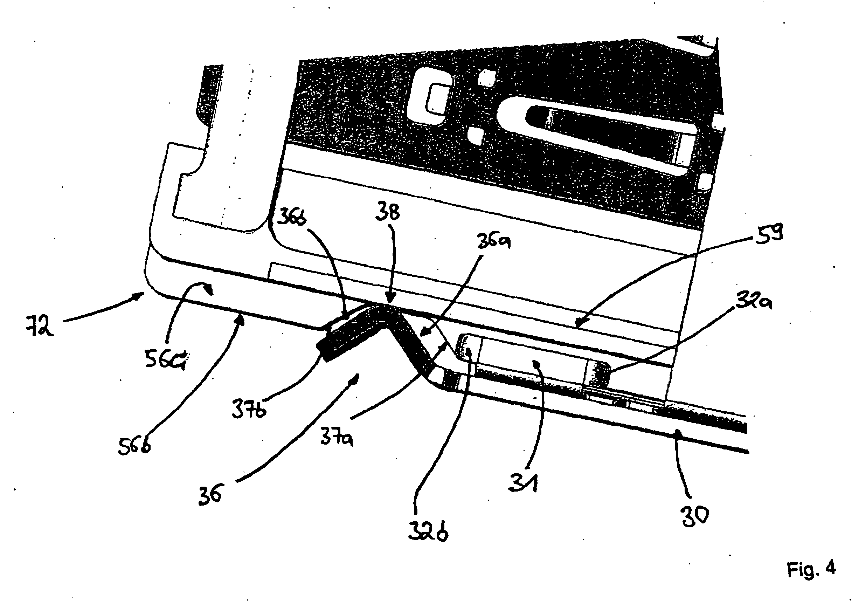

In den Figuren 1 bis 4 Ist ein Ausführungsbeispiel eines erfindungsgemäßen modularen SIM-Kartenlesers mit federbelasteter Schublade beschrieben.

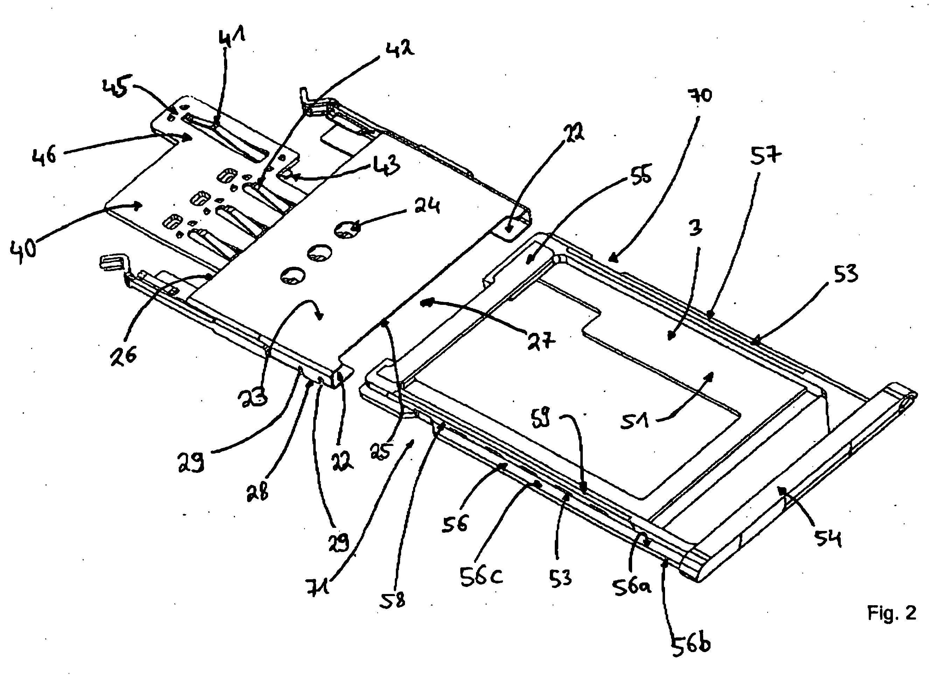

Den in Fig. 1 bis 4 gezeigte SIM-Kartenlaser 1 weißt ein, Insbesondere in Fig. 2 gezeigten Deckel 2 auf, in welchen, ebenfalls wie in Fig. 2 gezeigt, eine Schublade 3 einführbar ist. Unterhalb des Gehäuses 2 befindet sich ein Kontaktträger 4, welcher losgelöst vom Gehäuse 2 angeordnet ist, Der Deckel 2 weißt ferner Führungswände (Haltemittel) 20 und Führungsmittel 21, 22 auf sowie weiterhin Verriegelungshebel 30, Aus Gründen der Vereinfachung werden im Folgenden nur die Baugruppen beschrieben.

### Der Kontaktträger 4

Der Kontaktträger 4 ist vorzugsweise aus einem Isolierkörper 40 aus Kunststoff gebildet und besitzt eine Vielzahl von Lesekontakten 42. Die Abmessung des Isolierkörpers 40 mit den darin enthaltenen Lesekontakten 42 ist nur unwesentlich breiter wie die Breite der Lesezone der SIM-Karte, somit also in etwa nur die Hälfte der Breite einer gesamten SIM-Karte, Der Kontaktträger 4 umfasst weiterhin einen Kartenanwesenheitsschalter 41. Die Lesekontakte 42 und der Kartenanwesenheitsschalter 41 verfügen über Kontaktanschlussenden 43 welche mit einer Leiterplatte, vorzugsweise einer Leiterplatte in einem Handygehäuse, verbindbar sind an dem Isolierkörper 40 aus dessen unteren Ebene herausragen beziehungsweise vorzugsweise bündig mit dessen unteren Ebene abschlleßen. Der Kontaktträger 4 ist im Wesentlichen rechteckig ausgebildet und verfügt an seinem hinteren Ende über eine Kodiernase 45, welche ebenfalls als rechteckig ausgebildeter Isolierkörperabschnitt 46 am Isolierkörper 40 ausgebildet ist.

### Der Deckel 2

Der Deckel 2 besteht vorzugsweise aus Metallblech und weißt einen Hufeisenförmigen Querschnitt In seinem vorderen Bereich auf. Der Deckel 2 wird vorzugsweise als Stanzbiegetell ausgebildet mit einem im Wesentlichen ebenen Deckeloberseitenabschnitt 23 in dem sich Löcher 24, insbesondere Prüflöcher 24 befinden. Der Deckeloberseitenabschnitt 23 entspricht ungefähr der Hälfte der Länge der Schublade 3 und überdeckt in der Leseposition der Schublade 3 somit in etwa die Hälfte der darin befindlichen SIM-Karte, (hier nicht gezeigt). Der Deckel 2 verfügt an seinen beiden Seitenkanten über Führungswände (Haltemittel) 20 die In Ihrer Länge entlang dem Deckeloberseitenabschnitt 23 verlaufen. Diese Führungswände (Haltemittel) 20 dienen gleichzeltig der Funktion der Führungswände für die Schublade 3. Die Führungswände (Haltemittel) 20 ragen somit nach unten von dem Deckeioberseitenabschnitt 23 weg. Die Höhe der Führungswände (Haltemittel) 20 welche die Seitenwände der Deckelführung bilden, kurz die Führungswände, entspricht in etwa der Dicke der Schublade. An die seitlichen Führungswände (Haltemittel) 20 schließt sich ein Deckelunterseitenabschnitt 22 jeweils rechts und links der Längsseitenkanten an. Die Deckelunterseitenabschnitte 22 verlaufen mit ihrer Fläche parallel zur Fläche des Deckeloberseitenabschnittes 23 und bilden damit die Hufeisenform des Deckels 2, insbesondere einen Aufnahmeschlitz 27 für die Schublade 3. Die Deckelunterseitenabschnitte 22 sind so an dem Dedceloberseitenabschnftt 23 über die Seltenwände sprich Führungswände (Haltemittel) 20 verbunden, dass entlang des Deckels 2, zwei im Wesentlichen identische Führungsabschnltte für die Schublade 3 ausgebildet sind. Die Deckelunterseitenabschnitte 22 sind in ihrer Länge nach Hinten verlängert ausgeprägt und damit länger als die Länge der Deckeloberseitenabschnitte 23 und ragen somit nach hinten weg. In montierter Lage bezüglich des Kontaktträgers 4 zusammen mit dem Deckel 2 enden nach hinten herausragenden Abschnitte der Deckelunterseitenabschnltte 22 etwa bis hin zu den Enden der Lesekontakte 42, somit nicht bis zum Ende des Kontaktträgers 4, beziehungsweise des Isollerkörpers 40. An seinem einführseitigem Ende besitzt der Deckel eine Deckelforderkante 25 die etwas abgekröpft beziehungsweise nach hinten versetzt Ist und parallel verläuft zur Deckelhinterkante 26 des Deckels 2. An den Deckelunterseiteriabschnitten 22 befinden sich Befestigungsmittel 28, die dadurch gebildet werden, dass die Deckelunterseitenabschnitte 22 Unterbrechungen 29 aufweisen. Die Befestigungsmittel 28 dienen der Befestigung in einer Applikation, insbesondere im Gehäuse oder auf der Leiterplatte eines Mobilfunktelefons oder Handys. An den Seitenwänden des Deckels 2 insbesondere im Bereich der Führungswände (Haltemittel) 20, jeweils rechts und links angeordnet, befinden sich Verriegelungsarme 30, ausgebildet als Federarme. Die Verrlegelungsarme 30 sind im Wesentlichen symmetrisch und identisch ausgebildet, so dass im Folgenden nur einer der Verriegelungsarme 30 beschrieben wird. Der Verriegelungsarm 30 umfasst einen Befestigungsabschnitt 34, einen Federabschnitt 35 und einen Verriegelungsabschnitt 36. Der Verriegelungsabschnitt 36 wird über den Federabschnitt 35 mit dem Befestigungsabschnitt 34 verbunden, der wiederum befestigt ist an den Seitenwänden des Deckels 2 im Bereich der Führungswände (Haltemittel) 20. Dadurch kann der Verriegelungsarm 30 in Folge der Federabschnitte 35 parallel zur Ebene des Deckels 2, beziehungsweise parallel zur Fläche, die der Deckelseitenoberabschnitt 23 bildet, federn, sowie orthogonal dazu und zwar senkrecht zu dieser Ebene nach oben und unten. Der Befestigungsabschnitt 34 verläuft in etwa über die Hälfte in dem Bereich der Seltenwände entlang der Außenseiten der Führungswände (Haltemittel) 20. Die Länge des Befestigungsabschnitts 34 entspricht nicht der Gesamtlänge der Seitenwand des Deckels 2 und endet an dem Übergang zu einem sich verjüngenden Teil dem Federabschnitt 35, Deutlich zu erkennen in Fig. 2 ist, dass der Befestigungsabschnitt 34 in seiner Höhe breiter ausgebildet ist wie der Federabschnitt 35. der in etwa der Hälfte der Höhe des Befestigungsabschnittes 34 entspricht. An den Federabschnitt 35 schließt sich ein im Wesentlichen V-förmiger Verriegelungsabschnitt 36 an, der aus zwei zueinander abgewinkelten Schenkel 36 a und 36 b des Verriegelungsarmes 30 gebildet wird und In etwa in der Mitte der Abbiegungen über eine Haltekuppe 38 verfügt, die die Verriegelung mit einer korrespondierenden Ausnehmung der Schublade bewerkstelligt. Der V-förmige Verriegelungsabschnitt 36 ragt somit zum inneren hin in Richtung des Kontaktträgers 4, wodurch die Schublade klammerartig von beiden Seiten in korrespondierenden Ausnehmungen erfasst und verriegelt wird, Der V-förmige Verriegelungsabschnitt 36 verfügt ferner an seinem Schenkel 36a über eine Interaktionsfläche 37a und an seinem Schenkel 36b über eine Interaktionsfläche 37 b zu Interaktion mit korrespondierenden Flächen der Schublade 3. Am Verriegelungsarm 30 befindet sich ferner in dem Bereich des Federabschnlttes 35 ein Haltemittel 31, beziehungsweise ein Halteelement 31.

Das Halteelement 31 ragt seitlich nach innen in Richtung des Kontaktträgers als 90 Grad abgewinkelter Flügel hinein. Das Halteelement 31 hat an seinen beiden Enden jeweils abgekröpft nach oben einen Einführabschnitt 32a und einen Ausführabschnitt 32b. Das Halteelement 31 verläuft somit mit seiner wirksamen Unterseite parallel zur Kartenebene und zur Ebene des Deckels. Beim Einführen der Schublade in den SIM-Kartenleser bewirkt das Halteelement 31 einen Druck auf eine obere Seitenführungsfläche der Schublade, welche parallel zur Ebene des Halteelementes 31 verläuft und dazu beiträgt, die Schublade 3 federkraftbeaufschlagt zu führen, Der V-förmige Verriegelungsabschnitt 36 ragt nur soweit In Richtung des Kontaktträgers 4 hin zur Mitte ein, dass bel Auslenken des Verriegelungsarmes 30 die Unterseite der Halteelemente 31 noch auf den Führungsflächen der Schublade 3 zu liegen kommt. Bei Einschieben der Schublade 3 In die Losestellung befinden sich die Verriegelungsarme 30 In eine durch die Schublade 3 vorgespannter Stellung durch Auslenkung orthogonal zur Kartenebene. Die Höhe des Verriegelungsarmes 30 im Bereich des Verriegelungsabschnittes 36 entspricht der Höhe des Verriegelungsarmes 30 im Bereich des Befestigungsabschnittes 34. In einer alternativen Ausführungsform, kann das Halteelement 31 auch getrennt vom Deckel ausgebildet sein und anstatt dessen mit dem Verrlegelungsarm 30 verbunden zu sein. In diesem Fall ist die Höhe des Spaltes der von dem Halteelement 31 insbesondere dessen Unterseite gebildeten Aufnahmeraumes und dem der Oberseite des Deckelunterseitenabschnitts 22 In dem hinteren Bereich gebildeten Führungsschlitz etwas geringer ausgebildet als die Höhe des korrespondierenden Abschnittes der seitlichen Führung der Schublade 3. Dadurch schwenkt das Halteelement 31 bei Auslenkung des Verriegelungsarmes 30 mit aus in dem Moment wo die Schublade 3 mit eingesetzter Karte von der Öffnungsstellung in die Schließstellung bewegt wird. In den beiden oben genannten Ausführungsformen wird ein Verriegelungsmechanlsmus mit zwelgeteilter Kraftfunktionalität erzeugt, was bedeutet, dass die Einzugskraft ungleich der Auszugskraft Ist. Dadurch wird sichergestellt, dass die Kräfte zum Betätigen der Schublade beim Schließvorgang unterschiedlich sind zu den Kräften die benötigt werden die Schublade aus ihrer Schließposition wieder zu öffnen. In dem vorliegenden Fall ist die Schublade, die im Folgenden näher beschrieben wird, so gestaltet, dass für die Einschubrichtung, also das Schließen der Schublade eine geringere Kraft benötigt wird, als für die Auszugsrichtung und damit das Öffnen der Schublade.

### Die Schublade 3

Die Schublade 3 besteht im Wesentlichen aus einer Bodenplatte 51, welche eingefasst ist in einen Rahmen 53, der die linke und rechte Seitenwand der Schublade 3 bildet. An der vorderen Seite, In der in Fig. 2 rechts gelegene Vorderfläche der Bodenplatte 51 ist ein Schubteil 54 angebracht. Die entgegengesetzt zur Vorderfläche gelegene Rückfläche der Bodenplatte 51 schließt mit einem Steg 55 ab, welcher über die an deren steckseitigen Ende abgewinkelten Rahmenteile des Rahmens 53 mit der Bodenplatte 51 wirkverbunden ist. Die abgewinkelten Rahmenteile 53a, 53b kommen auf der Bodenplatte 51 zu liegen und bilden zusammen mit dem Steg 55 ein Kartenanschlag und damit einen Kartenaufnahmeraum zusammen mit dem Schubteil 54 für eine Karte, insbesondere eine SIM-Karte. Der Rahmen 53 wird gebildet an seinen beiden links und rechts befindlichen Längsseitenkanten durch Führungsmittel 56, 57 welche stufenförmig ausgebildet sind. Es wird im Folgenden nur ein Führungsmittel, nämlich das Führungsmittel 56 beschrieben, da es im Wesentlich identisch zum Führungsmittel 57 und symmetrisch ausgebildet ist. Das Führungsmittel 56 umfasst eine Führungsrippe 56a, die seitlich entlang der Schublade verläuft. Die Führungsrippe 56a umfasst widerrum eine seitliche Führungsfläche 56b und eine Obere Führungsfläche 56c. Davon etwas nach innen versetzt, umfasst der Rahmen eine weitere Seitenführungefläche 58, die sich beanstandet nach Innen zur Seitenführungsfläche 56b befindet. Entlang der Oberkante der Schublade 3 umfassen die seitlichen Rahmenteile 53 eine weitere Führungsfläche, eine obere Führungsfläche 59. Die Führungsrippe 56a ist in einem vorderen Bereich hin zum steckfertigen Ende nahe dem Steg 55 durch eine Ausnehmung 70, 71 unterbrochen, die V-förmig ausgebildet ist, sozusagen korrespondierend zu der V-Form des Verriegelungsarmes 30 und befindet sich in ihrer Lage im eingeschobenen Zustand exakt in dieser Position. Daher stehen sich die Interaktlonsflächen 37a, 37b gebildet durch die Seitenflächen innerhalb der Ausnehmung 70, 71 der Führungsrippe 56a mit den Schenkeiabschnltten 36a und 36b gegenüber. Zwischen diesen Interaktlorisflächen 37a und 37b sowie den Schenkelabschnitten 36a, 37b der Vernegeiungsarme 30 kommt es zu der gewünschten Interaktion. Dabei treten bei Zug an der Schublade aus ihrer Schließposition allerdings lediglich Interaktionen auf zwischen der Interaktionsfläche 37b und dem Schenkelabschnitt 36b in dem dieser bei Zug an dem Schubteil 54 an dieser Fläche entlanggleitet und dabei nach Außen ausgelenkt wird und insofern eine definierte Kraft auf die Schublade wirkt. Die Führungsrippe 56a umfasst weiterhin an Ihrem vorderen steckseltlgem Ende entlang der Seitenfläche 56b eine Steuerkurve 72, weiche beim Einschieben der Schublade 3 in Ihre Leseposition auf die Interaktlonsfläche 37a des Verriegelungsarmes 30 auftrifft und diesen nach außen hin auslenkt. Die Geometrie der Steuerkurve 72 und der Winkel zwischen der Interaktionsfläche 37b und der Fläche die der Schenkel 36b des Verriegelungsarmes 30 dazu bildet definieren die Einschub- und Einzugskräfte, Das Halteelement 31 bewirkt während dem Ein- und Ausschieben der Schublade eine definierte Haltekraft auf die obere Führungsfläche 56c der Führungsrippe 56a. Ist das Halteelement 31 mit dem Deckel 2 einstückig verbunden, so lässt sich ein definierter Bauraum und damit eine definierte Haltekraft für die Schublade einstellen. Bevor die Steuerkurve 72 beim Einschieben der Schublade 3 in ihre Schließstellung auf die Haltegruppe 38 des Verriegelungsarmes 30 trifft, wirkt berelts das Halteelement 31 mit seiner Unterseite auf die obere Führungsfläche 56c der Führungsrippe 56a der Schublade 3 und hält diese bereits sicher in ihrer Position. Bei weiterem Einschieben der Schublade 3 federt der Verriegelungsarm 30 aus und eine erhöhte Kraftbeaufschlagung erfolgt durch die Federkraft des Verriegelungsarms 30 mit seiner Haltegruppe 38, welcher auf die Seitenfläche 56b der Führungsrippe 56a wirkt. Bei weiterem Einschieben gleitet die seitliche Führungsfläche 56b entlang der Haltegruppe 38 bis diese in die Ausnehmung 70, 71 der Führungsrippe 56a eintaucht. In diesem Zustand hält das Halteelement 31 die obere Führungsfläche 56c der Führungsrippe 56a zusätzlich in Ihrer Position. Beim Herausziehen der Schublade 3 aus Ihrer Leseposition und Schließstellung trifft der Schenkelabschnitt 36b auf die Interaktionsfläche 37a und verhindert ein einfaches Herausziehen der Schublade 3. Die Wirkung lässt sich verstärken, indem an den korrespondierenden Flächen die Krümmung verstärkt wird.

Es wird zusätzlich auf folgende Besonderheiten in den Fig. 1 bis 4 dargestellten Ausführungsformen hingewiesen.

Die SIM-Kartenlessvorrlchtung 1 hat oberhalb der seltlichen Führungsrippen 56a, 57a weitere seitliche Führungeflächen 58 entlang der Seitenkanten der Schublade 3.
Die Schublade 3 verfügt entlang Ihrer beiden Längsseitenkanten und parallel zu den Führungsmitteln 56, 57 über obere Führungsflächen 59, die entlang der Längsseitenkanten verlaufen. Die Führungsrippen 56a, 57a verfügen über Ausnehmungen 70, 71, die geeignet sind mit den Verriegelungsabschnitten 36 der Verriegelungsarme 30 zusammen zu wirken, sodass die Schublade 3 In ihrem eingeschobenen Zustand, in der Leseposition gehalten wird. Damit ist die Schublade 3 sicher verriegelt.

Zusätzlich wird darauf hingewiesen, dass die Führungsrippen 56a, 57a vorzugsweise an Ihrem einführseitigem Ende über eine Steuerkurve 72 verfügen die dazu geeignet ist den Verriegelungsabschnitt 36 der Verriegelungsarme 30 aus Ihrer nicht ausgefederten Position in eine ausgefederte Stellung zu bewegen, wenn die Schublade 3 in ihre Schließstellung bewegt wird, sowie dass der Verriegelungsabschnitt 36 des Verriegelungsarmes 30 aus zwei V-förmig zueinander orientierten Schenkel 36a, 36b gebildet wird die an ihrem Verbindungspunkt über eine Haltekuppe 38 verfügen. Darüber hinaus verfügt die SIM-Kartenlesevorrichtung 1, wie in Fig. 2 ersichtlich, vorzugsweise über solche die Ausnehmungen 70, 71, die ebenfalls V-förmig ausgebildet sind und dadurch Interaktionsflächen 37a, 37b bereitstellen. Bei der SIM-Kartenlesevorrichtung 1 trifft beim Einschieben der Schublade 3 von Ihrer Öffnungsstellung in die Schließstellung die Steuerkurve 72 auf den Schenkel 36a und dadurch wird der Verriegelungsarm 30 aus seiner nicht ausgefederten Position in eine ausgefederte Position bewegt.
Bei vollständig eingeschobener Schublade 3, also In der Leseposition, befinden sich die Verriegelungsabschnitte 36 der Verriegelungsarme 30 in den Ausnehmungen 70, 71 der Schublade 3 und der Verriegelungsarm 30 in einer entlastenden Position und steht somit nicht unter Vorspannung. Bel Zug an der Schublade 3 zu Entnahme aus der Leseposition In eine öffnungsposition trifft der Schenkel 36b auf die Intaraktionsfläche 37b In der Ausnehmung 70, 71. Bei weiterem Zug zur Entnahme der Schublade 3 wird der Verriegelungsarm 30 in Folge der Wechselwirkung der Interaktionsfläche 37b mit dem Schenkel 36b ausgelenkt, unter Aufwendung einer zunehmenden Kraft. Die Führungsflächen 56c, 57c der Schublade 3 wirken mit den Halteelementen 31 während dem Öffnen und Schließen der Schublade 3 zusammen und bremsen sowie führen und halten diese.

### Bezugszeichenliste

Modulare SIM-Kartenlesevorrichtung mit federbelasteter Schublade
- 1: SIM-Kartenlesevorrichtung
- 2: Deckel
- 3: Schublade
- 4: Kontaktträger

- 20: Führungswände (Haltemittel)
- 22: Deckelunterseitenabschnitte
- 23: Decketoborseitenabschnitt
- 24: Prüflöcher
- 25: Deckelvorderkante
- 26: Deckelhinterkante
- 27: Aufnahmeschiltz
- 28: Befestigungsmittel
- 29: Unterbrechungen

- 30: verriegelungsarme
- 31: Halteelemente
- 32a: Einführabschnitt
- 32b: Ausführaberhnitt
- 34: Befestigungsabschnitt
- 35: Federabschnitt
- 36: Verriegelungsabschnitt
- 36a, 36b: Schenkel
- 37: Interaktionsabschnitte
- 37a, 37b: Interaktionsfläche
- 38: Haltekuppe

- 40: Isollerkörper
- 41: Kartenanwesenheitsschalter
- 42: Lesekontakte
- 43: Kontaktanschlussenden
- 45: Kodiernase
- 46: Isollerkörperabschnitt

- 50: Kartenaufnahmeraum
- 51: Bodenplatte
- 52: Codlerschräge für Karte
- 53: Rahmen
- 53a, 53b: Rahmenteile
- 54: Schubteil
- 55: Steg
- 56, 57: Führungsmittel
- 56a, 57a: Führungsrippen
- 56b, 57b: Seitenflächen
- 56c, 57c: Führungsflächen
- 58: seitliche Führungsflächen
- 59: Obere Führungsflächen

- 70, 71: Ausnehmungen
- 72: Steuerkurve

## Patentansprüche

1. SIM-Kartenlesevorrichtung (1) umfassend einen Kontaktträger (4), einen Deckel (2) und eine in den Deckel (2) einführbare Schublade (3), wobei der Deckel (2) ein Metalldeckel ist, wobei der Kontaktträger (4) Lesekontakte (2) enthält und der Deckel (2) über einen Deckeloberseitenabschnitt (23) eine Deckelvorderkante (25) und eine Deckelhinterkante (26) sowie zwei Seitenkanten verfügt, wobei der Deckel (2) entlang der Seitenkanten seitliche Führungswände (20) aufweist und parallel dazu über Deckelunterseitenabschnitte (22) zur Auflage der Schublade (3) verfügt, **dadurch gekennzeichnet, dass** am Deckel (2) Verriegelungsarme (30) zur Verriegelung der Schublade (3) mit dem Deckel (2) angeordnet sind und die Verriegelungsarme (30) an den Führungswänden (20) seitlich mittels eines Befestigungsabschnitts (34) angebracht sind und die Verriegelungsarme (30) ferner über einen Federabschnitt (35) verfügen, wobei an dem Federabschnitt (35) ein Verriegelungsabschnitt (36) zur Verriegelung des Deckels (2) mit der Schublade (3) ausgebildet ist.

2. SIM-Kartenlesevorrichtung (1), gemäß Anspruch 1, **dadurch gekennzeichnet, dass** die seitlichen Führungswände (20) und die Deckelunterseitenabschnitte (22) parallel, jedoch in einem Winkel von 90 Grad, zueinander verlaufen.

3. SIM-Kartenlesevorrichtung (1), gemäß Anspruch 2, **dadurch gekennzeichnet, dass** die Führungswände (20) und die Deckelunterseitenabschnitte (22) zusammen mit dem Deckeloberseitenabschnitt (23), welcher die beiden Führungswände (20) miteinander verbindet, einen Schubladenaufnahmeraum bildet.

4. SIM-Kartenlesevorrichtung (1), gemäß einem der vorhergehenden Ansprüche, **dadurch gekennzeichnet, dass** der Deckel (2) über ein Deckeloberseitenabschnitt (23) verfügt, der die Schublade zumindest teilweise im eingesteckten Zustand von oben her abschirmt.

5. SIM-Kartenlesevorrichtung (1), gemäß einem der vorhergehenden Ansprüche, **dadurch gekennzeichnet, dass** die Verriegelungsarme (30) an den Führungswänden (20) seitlich angebracht sind.

6. SIM-Kartenlesevorrichtung (1), gemäß einem der vorhergehenden Ansprüche, **dadurch gekennzeichnet, dass** die Verriegelungsarme (30) über einen Befestigungsabschnitt (34) und einen Federabschnitt (35) verfügen.

7. SIM-Kartenlesevorrichtung (1), gemäß einem der vorhergehenden Ansprüche, **dadurch gekennzeichnet, dass** der Deckel (2) im Bereich der Federabschnitte (35) über ein Halteelement (31) verfügt, welches einstückig mit dem Deckel (2) ausgebildet ist.

8. SIM-Kartenlesevorrichtung (1), gemäß Anspruch 7, **dadurch gekennzeichnet, dass** das Halteelement (31) vom Federabschnitt (35) nach innen hin hinausragen und dort mit dem Verriegelungsarm (30) verbunden sind.

9. SIM-Kartenlesevorrichtung (1), gemäß einem der vorhergehenden Ansprüche, **dadurch gekennzeichnet, dass** die Schublade (3) an ihren Seitenkanten über stufenförmige Führungsmittel (56, 57) verfügt.

10. SIM-Kartenlesevorrichtung (1), gemäß einem der vorhergehenden Ansprüche, **dadurch gekennzeichnet, dass** die Führungsmittel (56, 57) gebildet werden durch Führungsrippen (56a, 57a), sowie seitliche Führungsflächen (56b, 57b) und erste obere Führungsflächen (56c, 57c).

11. SIM-Kartenlesevorrichtung (1), gemäß einem der vorhergehenden Ansprüche, **dadurch gekennzeichnet, dass** oberhalb der seitlichen Führungsrippen (56a, 57a) sich weitere seitliche Führungsflächen (58) entlang der Seitenkanten der Schublade (3) befinden.

12. SIM-Kartenlesevorrichtung (1), gemäß einem der vorhergehenden Ansprüche, **dadurch gekennzeichnet, dass** die Schublade (3) entlang ihrer beiden Längsseitenkanten und parallel zu den Führungsmitteln (56, 57) weiterhin über obere Führungsflächen (59) verfügt, die ebenfalls entlang der Längsseitenkanten verlaufen.

## Claims

1. SIM card reading apparatus (1) comprising a contact support (4), a cover (2) and a tray (3) which can be inserted into the cover (3), wherein the cover (2) is a metal cover, wherein the contact support (4) contains reading contacts (2) and the cover (2) has a cover upper face section (23), a cover front edge (25) and a cover rear edge (26) and also two side edges, wherein the cover (2) has lateral guide walls (20) along the side edges and, parallel to the said guide walls, has cover lower face sections (22) for supporting the tray (3), **characterized in that** locking arms (30) for locking the tray (3) to the cover (2) are arranged on the cover (2), and the locking arms (30) are mounted on the guide walls (20) laterally by means of a fastening section (34), and the locking arms (30) also have a spring section (35), wherein a locking section (36) for locking the cover (2) to the tray (3) is formed on the spring section (35).

2. SIM card reading apparatus (1) according to Claim 1, **characterized in that** the lateral guide walls (20) and the cover lower face sections (22) run parallel, but at an angle of 90 degrees, to one another.

3. SIM card reading apparatus (1) according to Claim 2, **characterized in that** the guide walls (20) and the cover lower face sections (22), together with the cover upper face section (23) which connects the two guide walls (20) to one another, form a tray accommodation space.

4. SIM card reading apparatus (1) according to one of the preceding claims, **characterized in that** the cover (2) has a cover upper face section (23) which at least partially shields the tray from the top in the inserted state.

5. SIM card reading apparatus (1) according to one of the preceding claims, **characterized in that** the locking arms (30) are laterally mounted on the guide walls (20).

6. SIM card reading apparatus (1) according to one of the preceding claims, **characterized in that** the locking arms (30) have a fastening section (34) and a spring section (35).

7. SIM card reading apparatus (1) according to one of the preceding claims, **characterized in that** the cover (2) has a retaining element (31) in the region of the spring sections (35), the said retaining element being integrally formed with the cover (2).

8. SIM card reading apparatus (1) according to Claims 1 to 7, **characterized in that** the retaining element (31) projects inwards from the spring section (35) and is connected to the locking arm (30) at this point.

9. SIM card reading apparatus (1) according to one of the preceding claims, **characterized in that** the tray (3) has step-like guide means (56, 57) at its side edges.

10. SIM card reading apparatus (1) according to one of the preceding claims, **characterized in that** the guide means (56, 57) are formed by guide ribs (56a, 57a) and also lateral guide surfaces (56b, 57b) and first upper guide surfaces (56c, 57c).

11. SIM card reading apparatus (1) according to one of the preceding claims, **characterized in that** further lateral guide surfaces (58) are located along the side edges of the tray (3), above the lateral guide ribs (56a, 57a).

12. SIM card reading apparatus (1) according to one of the preceding claims, **characterized in that** the tray (3) also has upper guide surfaces (59) along its two longitudinal side edges and parallel to the guide means (56, 57), the said guide surfaces likewise running along the longitudinal side edges.

## Revendications

1. Dispositif de lecture de carte SIM (1) comprenant un support de contact (4), un cache (2) et un tiroir (3) pouvant être introduit dans le cache (2), le cache (2) étant un cache en métal, le support de contact (4) contenant des contacts de lecture (2) et le cache (2) disposant d'une section latérale supérieure de cache (23), d'une arête avant de cache (25) et d'une arête arrière de cache (26) ainsi que de deux arêtes latérales, le cache (2) comportant des parois de guidage (20) latérales le long des arêtes latérales et disposant, parallèlement à cela, de sections latérales inférieures de cache (22) pour poser le tiroir (3), **caractérisé en ce que** des bras de verrouillage (30) sont disposés contre le cache (2) pour le verrouillage du tiroir (3) d'avec le cache (2) et que les bras de verrouillage (30) sont placées en côté contre les parois de guidage (20) à l'aide d'une section de fixation (34) et que les bras de verrouillage (30) disposent en outre d'une section à ressort (35), une section de verrouillage (36) étant réalisée contre la section à ressort (35) pour le verrouillage du cache (2) d'avec le tiroir (3).

2. Dispositif de lecture de carte SIM (1), selon la revendication 1, **caractérisé en ce que** les parois de guidage (20) latérales et les sections latérales inférieures de cache (22) s'étendent parallèlement, toutefois selon un angle de 90 degrés l'une par rapport à l'autre.

3. Dispositif de lecture de carte SIM (1) selon la revendication 2, **caractérisé en ce que** les parois de guidage (20) et les sections latérales inférieures de cache (22) forment un espace de réception de tiroir conjointement avec la section latérale supérieure de cache (23) qui relie les deux parois de guidage (20) entre elles.

4. Dispositif de lecture de carte SIM (1) selon l'une quelconque des revendications précédentes, **caractérisé en ce que** le cache (2) dispose d'une section latérale supérieure de cache (23) qui protège au moins en partie le tiroir par le haut à l'état inséré.

5. Dispositif de lecture de carte SIM (1) selon l'une quelconque des revendications précédentes, **caractérisé en ce que** les bras de verrouillage (30) sont placés en côté contre les parois de guidage (20).

6. Dispositif de lecture de carte SIM (1) selon l'une quelconque des revendications précédentes, **caractérisé en ce que** les bras de verrouillage (30) disposent d'une section de fixation (34) et d'une section à ressort (35).

7. Dispositif de lecture de carte SIM (1) selon l'une quelconque des revendications précédentes, **caractérisé en ce que** le cache (2) dispose, dans la zone des sections à ressort (35), d'un élément d'arrêt (31) réalisé d'un seul tenant avec le cache (2).

8. Dispositif de lecture de carte SIM (1) selon les revendications 1 à 7, **caractérisé en ce que** l'élément d'arrêt (31) ressort vers l'intérieur depuis la section à ressort (35) et qu'il est relié à cet endroit au bras de verrouillage (30).

9. Dispositif de lecture de carte SIM (1) selon l'une quelconque des revendications précédentes, **caractérisé en ce que** le tiroir (3) dispose, au niveau de ses arêtes latérales, de moyens de guidage (56, 57) en escalier.

10. Dispositif de lecture de carte SIM (1) selon.l'une quelconque des revendications précédentes, **caractérisé en ce que** les moyens de guidage (56, 57) sont formés par des rainures de guidage (56a, 57a), ainsi que par des surfaces de guidage (56b, 57b) latérales et des premières surfaces de guidage (56c, 57c) supérieures.

11. Dispositif de lecture de carte SIM (1) selon l'une quelconque des revendications précédentes, **caractérisé en ce que** d'autres surfaces de guidage (58) latérales se trouvent le long des arêtes latérales du tiroir (3), au-dessus des rainures de guidage (56a, 57a) latérales.

12. Dispositif de lecture de carte SIM (1) selon l'une quelconque des revendications précédentes, **caractérisé en ce que** le tiroir (3) dispose en outre, le long de ses deux arêtes latérales longitudinales et parallèlement aux moyens de guidage (56, 57), de surfaces de guidage (59) supérieures s'étendant également le long des arêtes latérales longitudinales.
